(19) Europäisches Patentamt
European Patent Office
Office européen des brevets

(11) EP 2 407 431 A1

(12) **DEMANDE DE BREVET EUROPEEN**

(43) Date de publication:
**18.01.2012 Bulletin 2012/03**

(51) Int Cl.:
**C02F 1/46** (2006.01)  **C02F 1/20** (2006.01)
**C02F 1/461** (2006.01)

(21) Numéro de dépôt: **11290309.1**

(22) Date de dépôt: **04.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.07.2010 FR 1002945**

(71) Demandeur: **Gaz & Eaux**
**25930 Lods (FR)**

(72) Inventeur: **Meignen, Christian**
**76116 Ry (FR)**

(74) Mandataire: **Gallochat, Alain**
**39 rue du Clos de Paris**
**95170 Deuil La Barre (FR)**

(54) **Dispositif et procédé de production d'eau adoucie**

(57)  La présente invention concerne un nouveau procédé de production d'eau allégée ainsi qu'un dispositif de mise en oeuvre.

Le dispositif selon l'invention comprend notamment une cuve (1) dans laquelle se déroule l'électrolyse de l'eau à traiter (2), celle-ci constituant l'électrolyte, il a été imaginé de placer préférentiellement en bas de la cuve 1 des moyens permettant d'insuffler l'air dans ladite cuve (1). Ces moyens consisteront avantageusement en des tubes (3) munis d'orifices (4) par où est insufflé l'air, ces tubes (3) étant alimentés par un surpresseur d'air non représenté ici.

Application à la production d'eau allégée en carbonate de calcium, plus particulièrement destinée à être distribuée dans les réseaux d'alimentation en eau potable, mais aussi dans les installations domestiques et industrielles.

Figure 1

**Description**

La présente invention concerne un procédé amélioré pour la production d'eau allégée en carbonate de calcium, ainsi qu'un dispositif de mise en oeuvre de ce procédé.

L'objectif premier du procédé selon l'invention est de produire une eau allégée en carbonate de calcium, pour éliminer son pouvoir entartrant, plus particulièrement destinée à être distribuée dans les réseaux d'alimentation en eau potable, notamment destinée à la consommation humaine, mais aussi dans les installations industrielles et domestiques.

Il est rappelé que l'eau contient, en solution, un certain nombre de minéraux, parmi lesquels les bicarbonates de calcium et le calcium, sous forme d'ions $Ca^{++}$ et $HCO_3^-$, lequel génère l'ion $CO_3^=$.

Il est également rappelé que ces ions sont générateurs du carbonate de calcium lequel est peu soluble, sa solubilité variant en fonction de certains paramètres, tels que notamment la température de l'eau, l'aération, la pression et plus généralement toutes actions qui occasionnent une modification de l'équilibre calco-carbonique ; de plus, selon les conditions, le carbonate de calcium précipite sous différentes formes cristallographiques. Ce carbonate de calcium constitue l'élément essentiel du tartre dont les inconvénients bien connus ne seront pas rappelés dans la présente description.

Différents procédés ont été utilisés à ce jour pour éviter le dépôt de tartre puis son incrustation sur les parois des contenants de l'eau ; ils se distinguent entre procédés chimiques et procédés physiques.

Les solutions chimiques (utilisant de la chaux, de la soude ou des résines) bien que maîtrisées depuis longtemps comportent de nombreuses contraintes dont la première est d'ajouter des produits chimiques dans une eau naturelle de bonne qualité et la seconde est de retrouver tout ou partie de ces produits chimiques dans le milieu naturel.

Ces solutions chimiques présentent également des contraintes qui ne sont pas neutres en termes de mise en oeuvre, de personnels, d'approvisionnement, de manutentions, de volumes, de déchets polluants et plus généralement du point de vue de la sécurité et de l'environnement.

Le procédé faisant partie des procédés physiques, il ne sera pas davantage fait de développements sur les procédés chimiques.

Les procédés physiques présentent l'énorme avantage, à l'exception de la nano filtration, de ne pas modifier fondamentalement la composition originelle de l'eau, les énergies mises en oeuvre étant essentiellement électriques, électromagnétiques ou magnétiques ; parmi ces procédés, le plus efficace utilise la électrolyse de l'eau.

L'état de la technique le plus proche de celui de l'invention est illustré par les brevets français n° 96 00714 et 02 01015. Le procédé décrit dans ce brevet utilise une électrolyse de l'eau, cette dernière constituant l'électrolyte, où ladite électrolyse s'accompagne d'une déshydratation des germes de carbonate de calcium contenus dans l'eau faisant l'objet de ce traitement ; lors de cette déshydratation, il est fait appel à une énergie électrique.

Les améliorations faisant l'objet de la présente invention concernent un dispositif du type comportant une cuve dans laquelle on effectue une électrolyse au sein de l'eau à traiter qui constitue l'électrolyte, une pluralité d'anodes planes et des moyens permettant d'insuffler de l'air dans ladite cuve, lesdits moyens consistant en des tubes aérateurs munis d'orifices par où l'air est insufflé, lesdits tubes étant disposés à l'intérieur de la cuve et dans la partie inférieure de celle-ci, et lesdits tubes étant en outre disposés sous les anodes, parallèlement à ces dernières.

Préférentiellement, les orifices sont disposés de part et d'autre de l'anode correspondante.

Encore plus préférentiellement, les orifices forment avec l'axe du tube et le plan de l'anode un angle de 30 à 45°.

La présente invention concerne également un procédé pour la mise en oeuvre du dispositif précité.

D'autres caractéristiques de la présente invention seront mieux comprises à la lecture de la présente description, référence étant faite aux figures parmi lesquelles :

- la figure 1 représente en coupe transversale le détail d'une cuve d'électrolyse munie de cathodes et de tubes aérateurs, et
- la figure 2 représente schématiquement une vue de dessus détaillée de l'un des tubes aérateurs et de son anode correspondante.

Ainsi qu'il est connu par ailleurs, la précipitation du carbonate de calcium provient de la dissociation des « bicarbonates » en carbonates. Cette dissociation génère également du $CO_2$ selon la formule globale :

$$Ca^{2+} + 2\,HCO_3^- \rightarrow CaCO_3 + CO_2 + H_2O$$

Le $CO_2$ généré s'élimine partiellement par dégazage naturel, l'autre partie se dissout à nouveau dans le milieu selon la réaction inverse de la précédente.

La dissolution du $CO_2$ diminue significativement l'efficacité du processus en reformant l'ion $HCO_3^-$ qui a été dissocié précédemment. En outre, la présence de $CO_2$ dissout diminue également le pH de l'eau, ce qui n'est pas souhaitable, surtout pour une eau destinée à la consommation humaine.

Pour améliorer l'efficacité du procédé décrit dans les brevets français n° 96 00714 et 02 01015, il a été imaginé de provoquer un dégazage du $CO_2$ afin qu'une plus grande partie soit effectivement dégazée, c'est-à-dire éliminée sous forme gazeuse, ne se dissolve pas à nouveau, et ne soit pas facteur d'une baisse du pH.

Toutefois, un tel dégazage est particulièrement complexe car il doit tenir compte de facteurs multiples, et en premier lieu ne pas gêner la formation et la précipitation sous forme déshydratée de cristaux de carbonate de calcium ; cette formation et cette précipitation constituent le coeur de l'invention faisant l'objet des brevets français n° 96 00714 et 02 01015 et ne doivent être aucunement perturbées par l'élimination du $CO_2$.

Après de nombreuses tentatives avortées, il est apparu de façon surprenante qu'un tel dégazage pouvait valablement être conduit en insufflant de l'air à l'intérieur de la cuve où se produit l'électrolyse, sous réserve que les conditions selon lesquelles cet air est insufflé respectent strictement un certain nombre de critères.

En effet, la diffusion de l'air au sein de l'eau doit provoquer un dégazage mécanique adapté qui chasse les gaz dont le $CO_2$ hors de la cuve d'électrolyse, mais cela ne doit pas se faire au détriment de la formation et de la précipitation sous forme déshydratée de cristaux de carbonate de calcium ainsi que cela a déjà été mentionné. C'est pourquoi il convient d'éviter un brassage intense à l'intérieur de la cuve.

En respectant les critères selon lesquels l'air doit être insufflé, il est apparu qu'il y avait synergie entre d'une part la réaction électrolytique pour générer la précipitation du $CaCO_3$, et d'autre part l'aération mécanique pour évacuer le $CO_2$ naissant ; la simultanéité de ces deux opérations a permis de constater les bénéfices suivants non prévisibles :

- une amélioration incontestable de l'efficacité en termes de quantité de carbonate de calcium précipité (30 à 50 % de précipité supplémentaire) ;
- une diminution de 30 à 50 % environ de l'énergie à appliquer pour obtenir le même taux de précipitation que sans air (en incluant l'énergie consommée par le surpresseur d'air qui sera mentionné plus avant dans la présente description) ;
- un pH de l'eau ainsi traitée remonté au niveau du pH d'équilibre calco carbonique (obligation réglementaire des eaux distribuées destinées à la consommation humaine) sans ajout d'aucun produit chimique.

Parmi les critères que doit remplir l'air insufflé figurent :

- sa température, qui sera préférentiellement la température ambiante,
- sa pression, qui devra être supérieure à celle de la colonne d'eau formée par la cuve d'électrolyse sans pour autant être trop élevée car cela aboutirait à des projections de liquide hors de ladite cuve, à une augmentation de la turbidité du milieu et un entraînement des cristaux de carbonate de calcium ; en outre, une trop forte pression gênerait l'agglomération desdits cristaux, ce qui, au final, aboutirait à un magma solide autour des cathodes, interrompant, ou pour le moins, perturbant le passage du courant dans l'électrolyte situé dans ladite cuve. Une pression se situant entre 0,1 et 3 bars sera donc avantageusement utilisée,

- son débit, qui sera préférentiellement de 2 à 20 fois le volume d'eau traité (2 à 20 $m^3$/h pour 1 $m^3$/h d'eau traitée),
- son lieu d'arrivée, qui se situera préférentiellement au niveau de la base des anodes, de préférence sous celles-ci, l'air insufflé devant rester à proximité des anodes et éviter d'aller vers la cathode (d'où l'importance de la localisation d'arrivée, de la pression et du débit de l'air insufflé).

Les résultats optimaux sont obtenus lorsque l'ensemble de ces critères sont remplis simultanément.

De même, et compte tenu du fait que l'eau à traiter est notamment de l'eau potable destinée à la consommation humaine, les anodes doivent être « stables » ce qui veut dire qu'elles ne peuvent se consommer tant par la migration d'ion non acceptable dans l'eau potable que par la recherche d'une génération d'un oxyde quelconque devenant le réactif chimique utilisé pour le traitement du liquide à traiter.

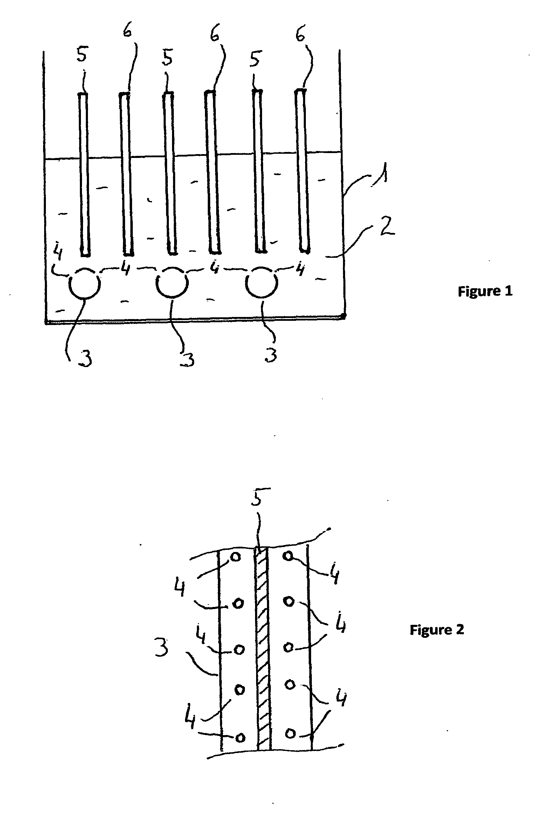

Pour permettre la mise en oeuvre du procédé selon l'invention, un dispositif a été conçu comprenant, ainsi qu'il apparaît à la figure 1, une cuve (1) dans laquelle se déroule l'électrolyse de l'eau à traiter (2), celle-ci constituant l'électrolyte, il a été imaginé de placer préférentiellement en bas de la cuve 1 des moyens permettant d'insuffler l'air dans ladite cuve (1). Ces moyens consisteront avantageusement en des tubes (3) munis d'orifices (4) par où est insufflé l'air, ces tubes (3) étant alimentés par un surpresseur d'air non représenté ici.

Selon un mode préférentiel de réalisation illustré à la figure 2, chaque tube (3) comportera une succession d'orifices (4), disposés par couples, chacun de ces couples étant positionné sous une anode (5), la cuve (1) comportant en alternance une série d'anodes (5) et de cathodes (6) où se déposent les cristaux de carbonate de calcium, leur formation et leur précipitation sous forme déshydratée se faisant en appliquant les paramètres électriques mentionnés dans les brevets français n° 96 00714 et 02 01015.

De plus, et afin d'obtenir un meilleur résultat, les orifices (4) d'un même couple sont disposés symétriquement de part et d'autre de chaque anode (5) ; préférentiellement, l'angle formé par ces orifices (4), l'axe du tube (3) et le plan de l'anode (5) sera de l'ordre de 30 à 45°, de façon à ce que l'air issu des orifices (4) vienne lécher la partie inférieure de l'anode correspondante (5).

Afin de ne pas surcharger la figure 1, la ou les nourrices alimentant en air les tubes (3) n'ont pas été représentées. Il serait ainsi envisageable de prévoir une nourrice d'alimentation en air, disposée au fond de la cuve (1) et dans laquelle déboucheraient les tubes aérateurs (3).

## Revendications

1. Dispositif pour la production d'eau allégée en carbonate de calcium, du type comportant une cuve dans laquelle on effectue une électrolyse au sein de l'eau à traiter qui constitue l'électrolyte, ladite électrolyse s'accompagnant d'une déshydratation des germes de carbonate de calcium contenus dans l'eau ainsi traitée, du type comportant une pluralité d'anodes planes et des moyens permettant d'insuffler de l'air dans ladite cuve, **caractérisé en ce que** lesdits moyens consistent en des tubes aérateurs (3) munis d'orifices (4) par où l'air est insufflé, lesdits tubes étant disposés à l'intérieur de la cuve (1) et dans la partie inférieure de celle-ci, lesdits tubes (3) étant en outre disposés sous les anodes (5), parallèlement à ces dernières.

2. Dispositif selon la revendication 1 **caractérisé en ce que** les orifices (4) sont disposés de part et d'autre de l'anode correspondante (5).

3. Dispositif selon la revendication 2 **caractérisé en ce que** les orifices (4) forment avec l'axe du tube (3) et le plan de l'anode (5) un angle de 30 à 45°.

4. Procédé pour la mise en oeuvre du dispositif selon l'une quelconque des revendications 1 à 3 **caractérisé en ce que** l'air insufflé au travers des orifices (4) l'air est insufflé sous une pression variant de 0,1 à 3 bars, pour un débit se situant entre 2 et 20 fois le volume d'eau à traiter.

5. Procédé selon la revendication 4 **caractérisé en ce que** l'air insufflé est à la température ambiante.

Figure 1

Figure 2

Europäisches Patentamt

European Patent Office

Office européen des brevets

**RAPPORT DE RECHERCHE EUROPEENNE**

Numéro de la demande

EP 11 29 0309

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/030162 A1 (SAINT GOBAIN SEVA [FR]; THERY PASCALE [FR]; FRANCY-CHAUSSON HELENE [FR] 23 mars 2006 (2006-03-23) <br> * page 1, ligne 5 - ligne 13 * <br> * page 3, ligne 9 - ligne 18 * <br> * page 4, ligne 5 - ligne 20 * <br> * page 13, ligne 22 - page 14, ligne 16; figures 6,7,9 * <br> * page 11, alinéa 19 - alinéa 20 * <br> * page 11, ligne 31 - page 12, ligne 10; tableau 1 * <br> * page 13, alinéa 14 - alinéa 18 * <br> * page 16, ligne 4 - ligne 16 * <br> * page 16, ligne 21 - page 17, ligne 7; revendications 19-21 * <br> ----- | 1-5 | INV. <br> C02F1/46 <br> C02F1/20 <br> C02F1/461 |
| Y | WO 2005/019502 A1 (BHP BILLITON INNOVATION PTY [AU]; GRAZIER PHILLIP ERNEST [AU]; RIGBY G) 3 mars 2005 (2005-03-03) <br> * page 6, ligne 8 - ligne 24; figures 1-3 * <br> * page 1, ligne 14 - ligne 17 * <br> ----- | 1-3 | |
| | | | **DOMAINES TECHNIQUES RECHERCHES (IPC)** <br> C02F <br> B01D |
| Y | US 3 959 112 A (AREND JR CARL A) 25 mai 1976 (1976-05-25) <br> * page 1, ligne 7 - ligne 9; figures 1-5 * <br> * page 2, ligne 40 - ligne 62 * <br> * page 2, ligne 39 - ligne 51 * <br> * page 3, ligne 4 - ligne 10 * <br> ----- | 1-3 | |
| Y | US 1 260 830 A (F.E. STUDT) 26 mars 1918 (1918-03-26) <br> * colonne 2, ligne 7 - ligne 9; figures 3-4 * <br> * colonne 2, ligne 15 - ligne 17 * <br> * colonne 2, ligne 48 - ligne 43 * <br> * page 2, ligne 63 - ligne 76 * <br> ----- <br> -/-- | 1-3 | |

Le présent rapport a été établi pour toutes les revendications

| Lieu de la recherche | Date d'achèvement de la recherche | Examinateur |
|---|---|---|
| Munich | 21 octobre 2011 | Oenhausen, Claudia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 29 0309

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2008/150541 A1 (SCHWARTZEL DAVID T [US]; FRAIM MICHAEL L [US]) 11 décembre 2008 (2008-12-11) * alinéa [0072]; figure 1 * * alinéa [0145] * ----- | 1-5 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 21 octobre 2011 | Oenhausen, Claudia |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 29 0309

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2011

| Document brevet cité au rapport de recherche | Date de publication | Membre(s) de la famille de brevet(s) | Date de publication |
|---|---|---|---|
| WO 2006030162 A1 | 23-03-2006 | EP 1817261 A1 | 15-08-2007 |
| WO 2005019502 A1 | 03-03-2005 | AR 045472 A1<br>CA 2536117 A1<br>JP 2007503525 A<br>PE 07382005 A1<br>US 2007251828 A1 | 26-10-2005<br>03-03-2005<br>22-02-2007<br>27-09-2005<br>01-11-2007 |
| US 3959112 A | 25-05-1976 | AUCUN | |
| US 1260830 A | | AUCUN | |
| WO 2008150541 A1 | 11-12-2008 | CA 2689646 A1<br>US 2011024361 A1 | 11-12-2008<br>03-02-2011 |

EPO FORM P0460

Pour tout renseignement concernant cette annexe : voir Journal Officiel de l'Office européen des brevets, No.12/82

## EP 2 407 431 A1

**RÉFÉRENCES CITÉES DANS LA DESCRIPTION**

**Documents brevets cités dans la description**

- FR 9600714
- FR 0201015